# EUROPÄISCHE PATENTSCHRIFT

(11) **EP 3 295 800 B1**
(45) Veröffentlichungstag und Bekanntmachung des Hinweises auf die Patenterteilung: **28.04.2021**
(21) Anmeldenummer: 16188997.7
(22) Anmeldetag: 15.09.2016
(51) Int. Cl.: A21C 15/02

(54) **SANDWICHKEKSVORRICHTUNG**
SANDWICH COOKIE APPARATUS
DISPOSITIF DE BISCUITS SANDWICH

(43) Veröffentlichungstag der Anmeldung: 21.03.2018
(73) Patentinhaber: Sollich KG, 32105 Bad Salzuflen (DE)
(72) Erfinder: Ellinghoven, Thomas, 32049 Herford (DE)
(74) Vertreter: REHBERG HÜPPE + PARTNER

(56) Entgegenhaltungen:
- GB-A- 313 017
- US-A- 3 343 504
- US-A1- 2004 045 449
- US-A1- 2015 135 972
- asjoconsultants: "asjo consultants sandwich biscuit pie cake cream deposit.asf", Youtube, 20. November 2011 (2011-11-20), XP054977177, Gefunden im Internet: URL:https://www.youtube.com/watch?v=ppvwRa I4vJs [gefunden am 2017-02-28]

## Beschreibung

### TECHNISCHES GEBIET DER ERFINDUNG

Die Erfindung betrifft eine Sandwichkeksvorrichtung mit einem Aufnahmebalken mit einem Grundkörper und einer Mehrzahl von an dem Grundkörper angeordneten Aufnahmeelementen zur Aufnahme jeweils eines Deckels für einen Sandwichkeks.

Sandwichkekse bestehen aus einem Boden, einem Deckel und einer zwischen diesen aufgenommenen Füllmasse. Bei der Füllmasse handelt es sich insbesondere um eine Süßwarenmasse. Die Füllmasse wird bei der Herstellung des Sandwichkekses auf den Boden dressiert. Anschließend wird der Deckel von oben auf der Füllmasse abgelegt und angedrückt.

### STAND DER TECHNIK

Eine Sandwichkeksvorrichtung ist aus dem Prospekt "Sollcocap; Die neuentwickelte Sandwichanlage", Stand 05/2014 der Anmelderin bekannt. Die Sandwichkeksvorrichtung weist einen Aufnahmebalken mit einem Grundkörper und einer Mehrzahl von an dem Grundkörper angeordneten Aufnahmeelementen zur Aufnahme jeweils eines Deckels für einen Sandwichkeks auf.

Eine weitere Sandwichkeksvorrichtung ist aus dem deutschen Patent DE 197 41 717 C1 bekannt.

Eine weitere Sandwichkeksvorrichtung ist aus dem US-amerikanischen Patent US 3,343,504 bekannt. Die Sandwichkeksvorrichtung weist eine drehbare Trommel mit einer Mehrzahl an dieser angeordneter Aufnahmeelemente zur Aufnahme jeweils eines Deckels für einen Sandwichkeks auf. Die Aufnahmeelemente können mechanisch zwischen einer aktivierten Stellung und einer deaktivierten Stellung verfahren werden.

### AUFGABE DER ERFINDUNG

Der Erfindung liegt die Aufgabe zugrunde, eine Sandwichkeksvorrichtung bereitzustellen, mit der auch nach dem Fehlen eines Deckels für einen Sandwichkeks ein ordnungsgemäßer Weiterbetrieb der Sandwichkeksvorrichtung sichergestellt ist.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft eine Sandwichkeksvorrichtung mit einem Aufnahmebalken mit einem Grundkörper und einer Mehrzahl von an dem Grundkörper angeordneten Aufnahmeelementen zur Aufnahme jeweils eines Deckels für einen Sandwichkeks. Die Aufnahmeelemente sind relativ zu dem Grundkörper zwischen einer aktivierten Stellung und einer deaktivierten Stellung verfahrbar ausgebildet und angeordnet.

Die Erfindung betrifft weiterhin ein Verfahren zum Herstellen von Sandwichkeksen mit den Schritten:
- Ablegen von Deckeln und Böden für die Sandwichkekse zur Bildung von Reihen über die Arbeitsbreite eines umlaufend angetriebenen Transportbands nebeneinander und zur Bildung von Spalten entlang der Länge des Transportbands hintereinander auf dem Transportband derart, dass in den Reihen jeweils nur Deckel oder Böden und in den Spalten Deckel und Böden abwechselnd angeordnet sind,
- Detektieren, ob ein Deckel in einer Reihe fehlt,
- wenn ein Deckel fehlt: Verfahren eines dem fehlenden Deckel zugeordneten Aufnahmeelements eines Aufnahmebalkens relativ zu einem Grundkörper des Aufnahmebalkens in eine deaktivierte Stellung,
- Aufnehmen der Reihe von Deckeln mit dem Aufnahmebalken, wobei jedes der Aufnahmeelemente mit Ausnahme des sich in der deaktivierten Stellung befindlichen Aufnahmeelements einen Deckel aufnimmt,
- Verfahren des Aufnahmebalkens relativ zu dem Transportband, und
- Ablegen der Reihe von Deckeln auf einer Reihe von Böden, wobei sich alle Aufnahmeelemente mit Ausnahme des dem fehlenden Deckel zugeordneten Aufnahmeelements in einer aktivierten Stellung befinden.

Diese Verfahrensschritte können genau in dieser Reihenfolge ausgeführt werden. Die Vorordnung, Zwischenordnung und Nachordnung weiterer Verfahrensschritte ist dabei aber möglich. Es ist weiterhin möglich, die Verfahrensschritte teilweise in einer anderen Reihenfolge auszuführen. Insbesondere kann der Schritt des Detektierens eines fehlenden Deckels auch erst nach dem Schritt des Aufnehmens der Reihe von Deckeln erfolgen.

Der für das Aufsetzen der Deckel auf die mit der Füllmasse versehenen Böden vorgesehene Aufnahmebalken weist für jeden Deckel ein separates Aufnahmeelement auf. Im ordnungsgemäßen Zustand der Vorrichtung trägt jedes Aufnahmeelement einen Deckel. Es kommt aber vor, dass ein Deckel beschädigt ist, nicht die erforderlichen Abmessungen aufweist oder fehlt. Fehlerhafte Kekse werden ausgesondert. Wenn also ein Deckelkeks nicht vorhanden ist, wird die Füllmasse dennoch auf den Bodenkeks aufgebracht. Für diesen Sandwichkeks fehlt aber der Deckel.

Wenn nun im Stand der Technik der Aufnahmebalken zum Ablegen der Deckel auf den mit der Füllmasse versehenen Böden und zum Anpressen der Deckel in Richtung der Böden zum Verteilen der Füllmasse verfahren wird, kommt das deckellose Aufnahmeelement in Kontakt mit der Füllmasse. Dies kann dazu führen, dass es nicht mehr ordnungsgemäß arbeitet und die Vorrichtung angehalten werden muss, um das Aufnahmeelement zu reinigen.

Dieses im Stand der Technik vorhandene Problem wird nun durch die erfindungsgemäße deaktivierte Stellung des Aufnahmeelements beseitigt. In der deaktivierten Stellung des Aufnahmeelements kommt das deckellose Aufnahmeelement beim oberhalb beschriebenen Absenken des Aufnahmebalkens in Richtung der mit der Füllmasse versehenen Böden nicht in Kontakt mit der Füllmasse. Es entsteht somit kein direkter Kontakt zur Füllmasse, so dass der ordnungsgemäße Weiterbetrieb der Sandwichkeksvorrichtung gesichert ist.

Die aktivierte Stellung des Aufnahmeelements ist dabei als seine Normalstellung zu verstehen, in der dieses zur Aufnahme und Abgabe eines Deckels in der Lage ist. Unter der deaktivierten Stellung ist dem hingegen die Stellung zu verstehen, in der das Aufnahmeelement keinen Deckel aufnimmt, trägt oder abgibt. Für den Wechsel zwischen diesen beiden Stellungen wird das Aufnahmeelement mittels eines maschinellen Antriebs relativ zu dem Grundkörper bewegt. Dies geschieht insbesondere automatisiert aufgrund von elektrischen Signalen einer Steuer- bzw. Regeleinrichtung. Ein manuelles Eingreifen des Bedieners zum Wechseln der Stellung des Aufnahmeelements ist nicht erforderlich.

Die Aufnahmeelemente sind so verfahrbar an dem Grundkörper angeordnet, dass sie die aktivierte Stellung und die deaktivierte Stellung unabhängig von den anderen Aufnahmeelementen einnehmen können. Jedes der Aufnahmeelemente ist also separat beweglich antreibbar ausgebildet und angeordnet, so dass die anderen Aufnahmeelemente in der jeweils anderen Stellung verbleiben oder zeitgleich oder zeitversetzt ebenfalls diese Stellung einnehmen können.

Die Aufnahmeelemente können translatorisch verfahrbar an dem Grundkörper angeordnet sein. Es kann sich dabei um eine einfache geradlinige hin- und hergehende Bewegung handeln. Anders gesagt können die Aufnahmeelemente in der aktivierten Stellung herausgefahren und in der deaktivierten Stellung gegenüber den anderen Aufnahmeelementen etwas hineingefahren sein. Anstelle einer solchen einfachen translatorischen Bewegung kann es sich aber auch z. B. um eine kurvenförmige Bewegung und beispielsweise eine rotatorische Bewegung handeln. Unter dem Verfahren der Aufnahmeelemente kann also auch ein Verschwenken verstanden werden.

Die Aufnahmeelemente können zwischen der aktivierten Stellung und der deaktivierten Stellung über einen Weg von mindestens 5 mm, insbesondere mindestens 10 mm, insbesondere zwischen 5 mm und 50 mm, relativ zu dem Grundkörper verfahrbar angeordnet sein. Ein solcher Weg stellt sicher, dass das in der deaktivierten Stellung befindliche Aufnahmeelement beim Fehlen eines Deckels nicht in Kontakt mit der Füllmasse gerät.

Die Sandwichkeksvorrichtung kann einen Aufnahmeelementantrieb aufweisen, der zum maschinellen Verfahren der Aufnahmeelemente zwischen der aktivierten Stellung und der deaktivierten Stellung ausgebildet ist. Es kann sich dabei um einen gemeinsamen Antrieb für alle Aufnahmeelemente eines Aufnahmebalkens oder um separate Antriebe handeln. Bei einem gemeinsamen Antrieb ist dieser aber so ausgebildet, dass die Aufnahmeelemente separat verfahren werden können.

Der Aufnahmeelementantrieb kann eine hydraulisch, pneumatisch oder elektrisch angetriebene Kolben-Zylinder-Einheit aufweisen. Bei einer hydraulischen oder pneumatischen Kolben-Zylinder-Einheit erfolgt die Betätigung des Kolbens zur Erreichung der aktivierten Stellung bzw. der deaktivierten Stellung in bekannter Weise durch ein Hydraulikmedium, insbesondere Hydrauliköl, bzw. Druckluft. Bei einer elektrisch angetriebenen Kolben-Zylinder-Einheit ist ein Elektromotor vorhanden. Dabei kann es sich insbesondere um einen Stellmotor handeln.

Der Aufnahmebalken kann als Unterdruckbalken und die Aufnahmeelemente als Düsenelemente ausgebildet sein. Die Deckel werden also durch einen an den Düsenelementen anliegenden Unterdruck am Aufnahmebalken festgesaugt und können so mit diesem weitertransportiert werden. Der Unterdruck wird durch eine Unterdruckquelle erzeugt. Zum Freigeben der Deckel wird der Unterdruck deaktiviert. Der Unterdruck kann mittels einer Unterdruckquelle im Inneren des Aufnahmebalkens und den Düsen erzeugt werden. Er kann aber auch direkt in den Düsen erzeugt werden. Dafür kann z. B. Druckluft angelegt und diese über eine Bernoulli-Düse zur Unterdruckerzeugung genutzt werden.

Es ist aber auch möglich, dass der Aufnahmebalken als Greifbalken und die Aufnahmeelemente als Greifelemente ausgebildet sind. Anstelle des Aufnehmens durch Unterdruck erfolgt also ein mechanischer Eingriff zwischen den Aufnahmeelementen und den Deckeln.

Die Sandwichkeksvorrichtung weist eine Fehlkeksdetektionsvorrichtung auf, die so ausgebildet ist, dass sie beim Fehlen eines Deckels für einen Sandwichkeks ein Fehlersignal ausgibt und aufgrund des Fehlersignals das der Fehlstelle zugeordnete Aufnahmeelement von der aktivierten Stellung in die deaktivierte Stellung verfahren wird. Ein solches Fehlersignal kann nicht nur beim Fehlen eines Deckels, sondern auch bei einer Beschädigung oder einer maßlichen Abweichung des Deckels ausgegeben werden. Fehlerhafte Deckel werden dann aus der Sandwichkeksvorrichtung ausgesondert. Dies geschieht insbesondere durch Ausblasen mit Druckluft.

Die Fehlkeksdetektionsvorrichtung kann so ausgebildet sein, dass sie das Fehlen eines Deckels an einem Aufnahmeelemente detektiert. Es wird also nicht das Fehlen des Deckels auf dem Transportband detektiert. Bei einer Ausbildung der Aufnahmeelemente als mechanische Greifelemente kann hierfür die Endposition der Greifelemente überwacht werden. Wenn kein Deckel vorhanden ist, greifen diese quasi ins Leere und sind weniger weit beabstandet angeordnet. Bei einer Ausbildung der Greifelemente als Düsenelemente mit den zuvor genannten Bernoulli-Düsen kann die Luftgeschwindigkeit überwacht werden. Wenn kein Deckel vorhanden ist, ist die Luftgeschwindigkeit in dem Düsenelement größer. Bei einer Ausbildung der Greifelemente als Düsenelemente mit Erzeugung von Unterdruck im Inneren des Aufnahmebalkens und den Düsen durch eine Unterdruckquelle kann der Unterdruck überwacht werden. Wenn kein Deckel vorhanden ist, ist auch kein Unterdruck vorhanden, d. h. der Druck in dem Düsenelement entspricht dem Umgebungsdruck.

Die Sandwichkeksvorrichtung kann ein umlaufend angetriebenes Transportband für die Aufnahme der Deckel und Böden für die Sandwichkekse aufweisen, wobei der Aufnahmebalken relativ zu dem Transportband verfahrbar ausgebildet und angeordnet ist.

Dabei können die Deckel und Böden für die Sandwichkekse zur Bildung von Reihen über die Arbeitsbreite des Transportbands nebeneinander und zur Bildung von Spalten entlang der Länge des Transportbands hintereinander auf dem Transportband aufliegen. Dabei sind in den Reihen jeweils nur Deckel oder Böden und in den Spalten Deckel und Böden abwechselnd angeordnet. Zur Bildung der Sandwichkekse wird dann in einer Reihe von Böden auf jeden der Böden die Füllmasse dressiert. Mittels des Aufnahmebalkens wird eine Reihe von Deckeln angehoben, der Aufnahmebalken relativ zu dem sich weiterbewegenden Transportband verfahren und die Deckel auf den Böden mit der Füllmasse aufgesetzt und etwas in die Füllmasse eingepresst. Dies kann insbesondere so realisiert werden, dass eine Reihe von Deckeln auf der benachbarten Reihe von Böden abgelegt wird. Es kann sich dabei entweder um die in der Bandlaufrichtung oder entgegen der Bandlaufrichtung benachbarte Reihe handeln. Das Transportband wird dabei insbesondere kontinuierlich angetrieben.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Aufnahmebalken die Rede ist, ist dies so zu verstehen, dass genau ein Aufnahmebalken, zwei Aufnahmebalken oder mehr Aufnahmebalken vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine perspektivische Ansicht eines Teils einer beispielhaften Ausführungsform der neuen Sandwichkeksvorrichtung.
- **Fig. 2**: zeigt einen Teil der Sandwichkeksvorrichtung aus Fig. 1 etwas größer.
- **Fig. 3**: zeigt eine perspektivische Ansicht eines Teils des Aufnahmebalkens der Sandwichkeksvorrichtung gemäß Fig. 1 und 2.
- **Fig. 4**: zeigt eine Seitenansicht des Aufnahmebalkens gemäß Fig. 3.
- **Fig. 5**: zeigt eine schematische Ansicht der Sandwichkeksvorrichtung mit einem Aufnahmeelement des Aufnahmebalkens in seiner aktivierten Stellung.
- **Fig. 6**: zeigt eine schematische Ansicht der Sandwichkeksvorrichtung mit einem Aufnahmeelement des Aufnahmebalkens in seiner deaktivierten Stellung.

### FIGURENBESCHREIBUNG

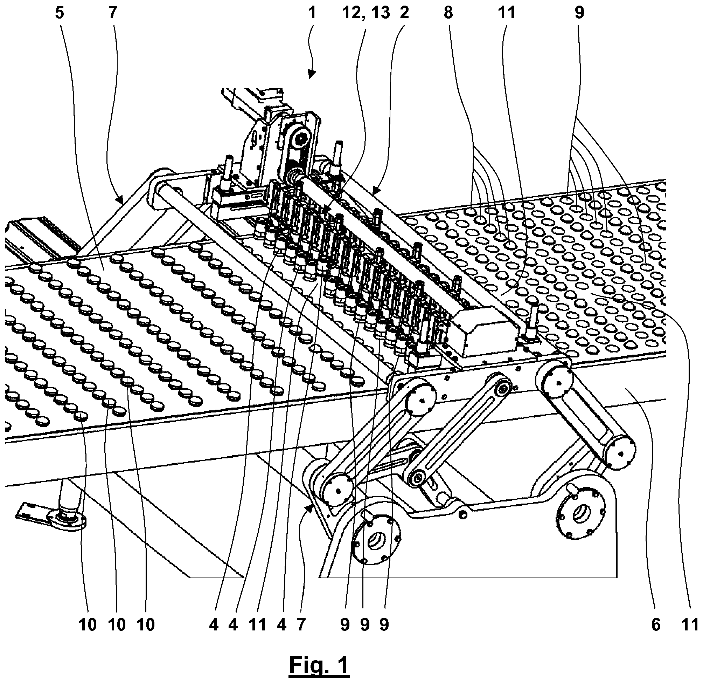

Fig. 1-4 zeigen verschiedene Ansichten eines Teils einer beispielhaften Ausführungsform einer neuen Sandwichkeksvorrichtung 1. Die Sandwichkeksvorrichtung 1 weist einen Aufnahmebalken 2 mit einem Grundkörper 3 und einer Mehrzahl von an dem Grundkörper 3 angeordneten Aufnahmeelementen 4 auf.

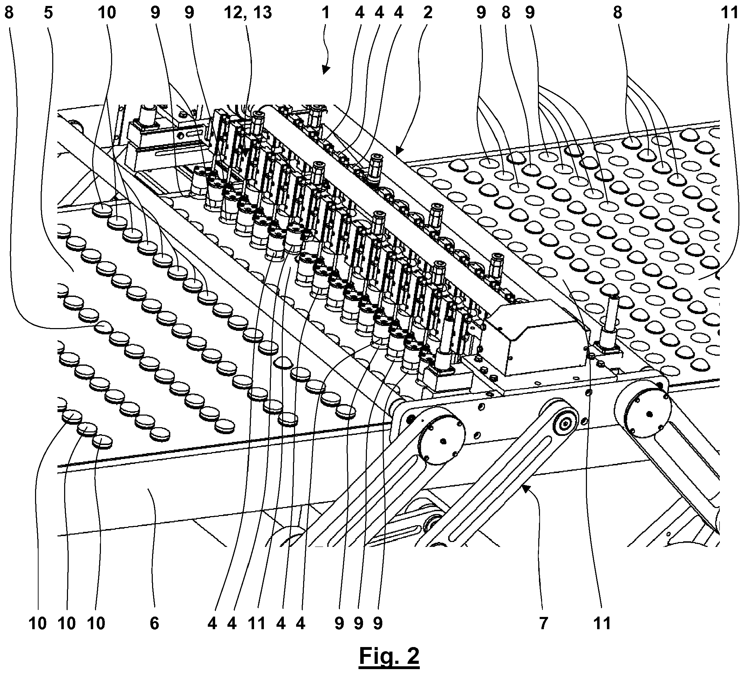

Die Sandwichkeksvorrichtung 1 weist weiterhin ein umlaufend angetriebenes Transportband 5 auf, das kontinuierlich relativ zu einem Rahmen 6 der Sandwichkeksvorrichtung angetrieben ist. In den Darstellungen der Fig. 1 und 2 verläuft die Transportrichtung des Obertrums des Transportbands 5 von rechts nach links. Der Aufnahmebalken 2 ist mittels eines Antriebs 7 automatisiert und koordiniert relativ zu dem Rahmen 6 und dem Transportband 5 verfahrbar ausgebildet. Die Verfahrbewegung findet dabei sowohl in der Transportrichtung bzw. entgegengesetzt zu der Transportrichtung als auch in einer Richtung senkrecht dazu statt - d. h. von oben nach unten.

Auf dem Transportband 6 befinden sich jeweils abwechselnd eine Reihe von Böden 8 und eine Reihe von Deckeln 9 für Sandwichkekse 10. Auf den Böden 8 befindet sich jeweils eine Portion einer Füllmasse 14, die zuvor mittels einer (nicht dargestellten) Dressiervorrichtung auf die Böden 8 aufgebracht wurde.

Es ist erkennbar, dass die Reihen normalerweise vollständig mit Böden 8 bzw. Deckeln 9 gefüllt, diese innerhalb der Reihe gleichmäßig beabstandet und die Reihen zueinander gleichmäßig beabstandet sind. Da der fehlerfreie Normalbetrieb der Sandwichkeksvorrichtung 1 dem Fachmann geläufig ist, wird auf weitere diesbezügliche Beschreibungen verzichtet. Zur Erläuterung der Funktionalität der Erfindung sind in Fig. 1, 2 drei Fehlstellen 11 dargestellt, an denen jeweils ein Deckel 9 fehlt. Der jeweilige Deckel 9 hat entweder von Anfang an gefehlt oder war beschädigt und wurde mittels einer (nicht dargestellten) Aussonderungseinrichtung vom Transportband 5 entfernt.

Im vorliegenden Beispiel handelt es sich bei dem Aufnahmebalken 2 um einen Unterdruckbalken, und die Aufnahmeelemente sind als Düsenelemente ausgebildet. Über eine (nicht dargestellte) Unterdruckquelle kann somit ein Unterdruck an den Düsenelementen automatisiert anstehen bzw. nicht anstehen. Bei anstehendem Unterdruck können die Düsenelemente einen Deckel 9 aufnehmen, sofern sie sich in einem hinreichend kleinen Abstand zu dem Deckel 9 befinden. Beim Abstellen des Unterdrucks geben die Aufnahmeelemente 4 den jeweiligen Deckel 9 dann wieder frei. Der Aufnahmebalken 2 könnte aber auch als Greifbalken und die Aufnahmeelemente 4 als mechanische Greifelemente ausgebildet sein.

Im vorliegenden Beispiel sind die Aufnahmeelemente 4 doppelreihig an dem Aufnahmebalken 2 angeordnet. Dies wird zur Erhöhung des Durchsatzes der Sandwichkeksvorrichtung 1 genutzt. Jede der Reihen der Aufnahmeelemente 4 ist dabei einer Reihe von Deckeln 9 zugeordnet, wobei somit zwei Reihen von Deckeln 9 gleichzeitig verarbeitet werden. Es könnte aber auch nur eine Reihe oder drei, vier oder mehr Reihen vorhanden sein.

Im vorliegenden Beispiel weist jede der Reihen der Aufnahmeelemente 4 siebzehn Aufnahmeelemente 4 auf. Es könnte sich aber auch um eine andere Anzahl von Aufnahmeelementen 4, insbesondere zwischen 1 und 50 handeln. Insbesondere sind mindestens 10 Aufnahmeelemente 4 pro Reihe vorhanden.

Die Sandwichkeksvorrichtung 1 weist weiterhin einen Aufnahmeelementantrieb 12 auf, der zum maschinellen Verfahren der Aufnahmeelemente 4 zwischen einer aktivierten Stellung und einer deaktivierten Stellung ausgebildet ist. Im vorliegenden Beispiel weist der Aufnahmeelementantrieb 12 pneumatisch angetriebene Kolben-Zylinder-Einheiten 13 auf. Jedes der Aufnahmeelemente 4 weist eine derartige Kolben-Zylinder-Einheit 13 auf und ist dadurch unabhängig von den anderen Aufnahmeelementen 4 zwischen der aktivierten Stellung und der deaktivierten Stellung verfahrbar. Andere Antriebe sind aber auch möglich.

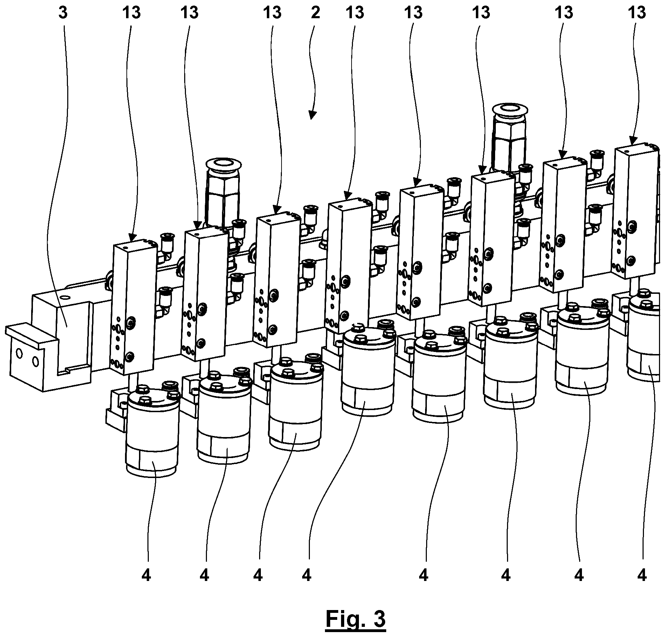

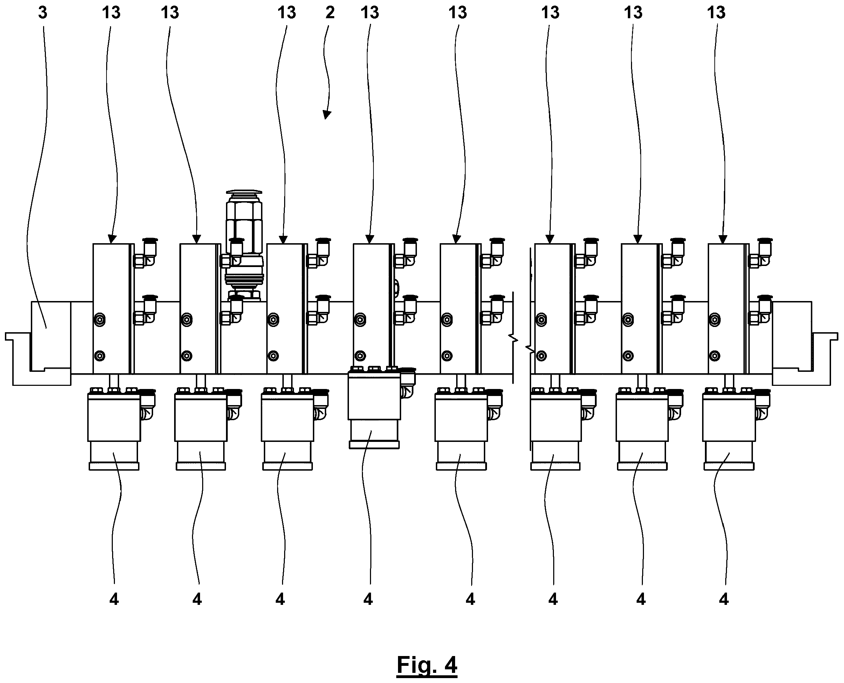

In Fig. 1-4 ist jeweils eines der Aufnahmeelemente 4 in der deaktivierten Stellung dargestellt, während sich die anderen Aufnahmeelemente 4 in der aktivierten Stellung befinden. In der Darstellung der Fig. 1 und 2 befindet sich das siebte Aufnahmeelemente 4 von links in der deaktivierten Stellung. In Fig. 3 und 4 handelt es sich um das vierte Aufnahmeelemente 4 von links. Es können sich aber auch mehrere Aufnahmeelemente 4 gleichzeitig in der deaktivierten Stellung befinden. Unter dem in Fig. 1 und 2 dargestellten deaktivierten Aufnahmeelement 4 ist die zugeordnete Fehlstelle 11 vorhanden.

In dem dargestellten Beispiel der Aufnahmeelemente 4 mit einer Kolben-Zylinder-Einheit 13 werden die Aufnahmeelemente 4 translatorisch hin- und hergehend relativ zu dem Grundkörper 3 verfahren. Die Umkehrpunkte dieser Bewegung stellen die aktivierte bzw. deaktivierte Stellung dar. Anstelle dieser einfachen translatorischen Bewegung könnte aber auch eine andere Bewegung ausgeführt werden, die sicherstellt, dass sich das jeweilige Aufnahmeelement 4 so von dem jeweiligen Deckel 9 entfernt, dass dieser nicht durch das Aufnahmeelement 4 aufgenommen wird.

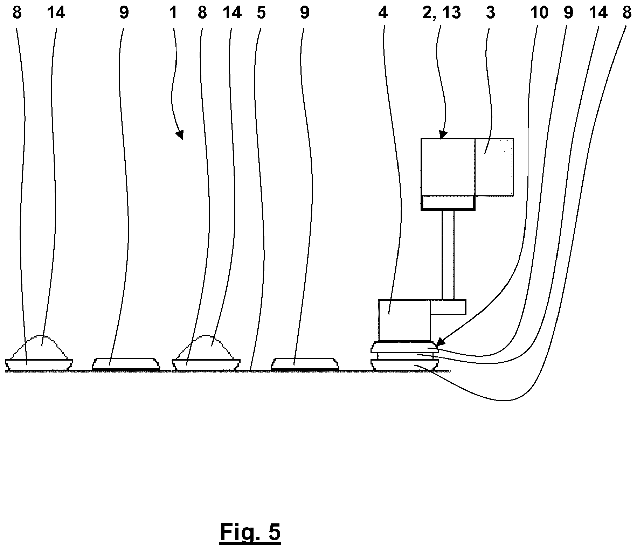

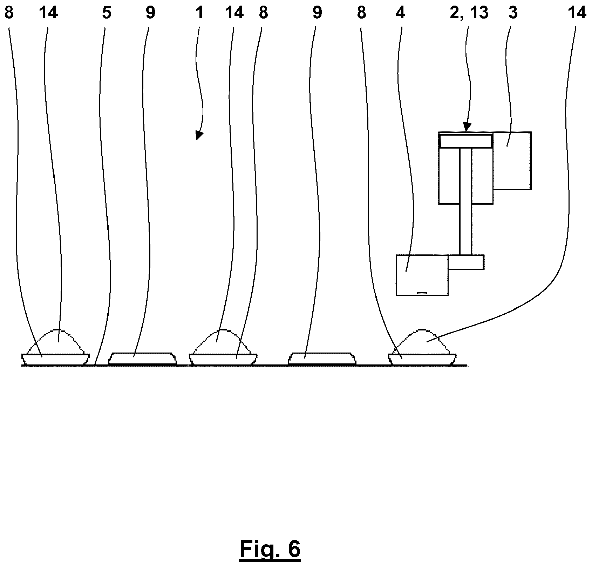

Die Funktionalität der Sandwichkeksvorrichtung 1 wird nun im Folgenden beschrieben. Hierzu werden nun auch die Fig. 5 und 6 hinzugezogen. Die Sandwichkeksvorrichtung 1 weist eine (nicht dargestellte) Fehlkeksdetektionsvorrichtung auf, die so ausgebildet ist, dass sie beim Fehlen eines Deckels 9 für einen Sandwichkeks 10 ein Fehlersignal ausgibt. Aufgrund dieses Fehlersignals wird das der Fehlstelle 11 zum maßgeblichen Zeitpunkt zugeordnete Aufnahmeelement 4 von der aktivierten Stellung in die deaktivierte Stellung verfahren. Ansonsten würde nämlich das Aufnahmeelemente 4, welches keinen Deckel 9 aufnimmt, Gefahr laufen, in Kontakt mit der Füllmasse 14 zu gelangen, die sich auf dem zugehörigen Boden 8 befindet. Dies ist gut anhand eines Vergleichs von Fig. 5 und 6 erkennbar.

In Fig. 5 ist ein sich in der aktivierten Stellung befindliches Aufnahmeelement 4 dargestellt. Beim Absenken des Aufnahmebalkens 2 in Richtung des Transportbands 5 wird der Deckel 9 in Richtung der Füllmasse 14 bewegt und verdrückt diese somit teilweise zwischen dem Boden 8 und dem Deckel 9. Anschließend wird der Unterdruck deaktiviert, so dass der Deckel 9 von dem Aufnahmeelement 4 freikommt. Ein ordnungsgemäßer Sandwichkeks 10 wurde gebildet und wird weitertransportiert.

In Fig. 6 ist nun die Situation dargestellt, in der sich kein Deckel 9 an dem Aufnahmeelement 4 befindet. Das Aufnahmeelement 4 befindet sich demgemäß in der deaktivierten (hochgefahrenen) Stellung. Beim Absenken des Aufnahmebalkens 2 in Richtung des Transportbands 5 kommt es aufgrund der hochgefahrenen Stellung des Aufnahmeelements 4 zu keinem unerwünschten Kontakt zwischen dem Aufnahmeelement 4 und der Füllmasse 14. Es liegt ein unvollständiger Keks vor, der nur aus einem Boden 8 mit darauf angeordneter Füllmasse 10 besteht. Dieser unvollständige Keks wird im weiteren Verlauf ausgesondert.

Wenn ein Boden 8 fehlt, wird die Füllmasse 14 dennoch aufgebracht. Sie gelangt damit zwangsläufig auf das Transportband 5. Dies stellt aber kein Problem dar, da das Transportband 5 während seines Umlaufs mittels eines Abstreifers oder dergleichen gereinigt werden kann.

Die Einnahme der deaktivierten Stellung ist weiterhin nicht für das Aufnahmeelement 4 erforderlich, welches den Deckel 9 trägt, der zur Bildung des Kekses dient, dessen Boden 8 fehlt. Beim Ablegen des Deckels 9 auf der Füllmasse 14 ohne darunter angeordnetem Boden 8 entsteht zwar kein vollständiger Sandwichkeks 10. Es besteht aber auch nicht die Gefahr einer Verschmutzung oder Beschädigung der Sandwichkeksvorrichtung 1. Es muss lediglich sichergestellt werden, dass dieser unvollständige Keks ausgesondert wird.

Die neue Sandwichkeksvorrichtung 1 stellt also durch eine besondere Berücksichtigung von Fehlstellen 11 von Deckeln 9 sicher, dass keine Ausfallzeiten der Sandwichkeksvorrichtung 1 aufgrund von durch Füllmasse 14 verschmutzten Aufnahmeelementen 4 entstehen.

### BEZUGSZEICHENLISTE

- 1: Sandwichkeksvorrichtung
- 2: Aufnahmebalken
- 3: Grundkörper
- 4: Aufnahmeelement
- 5: Transportband
- 6: Rahmen
- 7: Antrieb
- 8: Boden
- 9: Deckel
- 10: Sandwichkeks
- 11: Fehlstelle
- 12: Aufnahmeelementantrieb
- 13: Kolben-Zylinder-Einheit
- 14: Füllmasse

## Patentansprüche

1. Sandwichkeksvorrichtung (1), mit einem Aufnahmebalken (2) mit einem Grundkörper (3) und einer Mehrzahl von an dem Grundkörper (3) angeordneten Aufnahmeelementen (4) zur Aufnahme jeweils eines Deckels (9) für einen Sandwichkeks (10), **dadurch gekennzeichnet, dass**
die Aufnahmeelemente (4) relativ zu dem Grundkörper (3) zwischen einer aktivierten Stellung und einer deaktivierten Stellung so verfahrbar ausgebildet und an dem Grundkörper (3) angeordnet sind, dass sie die aktivierte Stellung und die deaktivierte Stellung unabhängig von den anderen Aufnahmeelementen (4) einnehmen können, und
eine Fehlkeksdetektionsvorrichtung vorhanden ist, die so ausgebildet ist, dass sie beim Fehlen eines Deckels (9) für einen Sandwichkeks (10) ein Fehlersignal ausgibt und aufgrund des Fehlersignals das der Fehlstelle (11) zugeordnete Aufnahmeelement (4) von der aktivierten Stellung in die deaktivierte Stellung verfahren wird.

2. Sandwichkeksvorrichtung (1) nach Anspruch 1, **dadurch gekennzeichnet, dass** die Aufnahmeelemente (4) translatorisch verfahrbar an dem Grundkörper (3) angeordnet sind.

3. Sandwichkeksvorrichtung (1) nach Anspruch 2, **dadurch gekennzeichnet, dass** die Aufnahmeelemente (4) zwischen der aktivierten Stellung und der deaktivierten Stellung über einen Weg von mindestens 5 mm, insbesondere mindestens 10 mm, insbesondere zwischen 5 mm und 50 mm, relativ zu dem Grundkörper (3) verfahrbar angeordnet sind.

4. Sandwichkeksvorrichtung (1) nach mindestens einem der vorhergehenden Ansprüche, **gekennzeichnet durch** einen Aufnahmeelementantrieb (12), der zum maschinellen Verfahren der Aufnahmeelemente (4) zwischen der aktivierten Stellung und der deaktivierten Stellung ausgebildet ist.

5. Sandwichkeksvorrichtung (1) nach Anspruch 4, **dadurch gekennzeichnet, dass** der Aufnahmeelementantrieb (12) eine hydraulisch, pneumatisch oder elektrisch angetriebene Kolben-Zylinder-Einheit (13) aufweist.

6. Sandwichkeksvorrichtung (1) nach mindestens einem der vorhergehenden Ansprüche, **dadurch gekennzeichnet, dass** der Aufnahmebalken (2) als Unterdruckbalken und die Aufnahmeelemente (4) als Düsenelemente ausgebildet sind.

7. Sandwichkeksvorrichtung (1) nach mindestens einem der Ansprüche 1 bis 5, **dadurch gekennzeichnet, dass** der Aufnahmebalken (2) als Greifbalken und die Aufnahmeelemente (4) als Greifelemente ausgebildet sind.

8. Sandwichkeksvorrichtung (1) nach mindestens einem der vorhergehenden Ansprüche, **dadurch gekennzeichnet, dass** die Fehlkeksdetektionsvorrichtung so ausgebildet ist, dass sie das Fehlen eines Deckels (9) an einem Aufnahmeelemente (4) detektiert.

9. Sandwichkeksvorrichtung (1) nach mindestens einem der vorhergehenden Ansprüche, **dadurch gekennzeichnet, dass** die Sandwichkekse (10) jeweils einen Boden (8) aufweisen und ein umlaufend angetriebenes Transportband (5) für die Aufnahme der Deckel (9) und Böden (8) für die Sandwichkekse (10) vorhanden ist, wobei der Aufnahmebalken (2) relativ zu dem Transportband (5) verfahrbar ausgebildet und angeordnet ist.

10. Sandwichkeksvorrichtung (1) nach Anspruch 9, **dadurch gekennzeichnet, dass** die Deckel (9) und Böden (8) für die Sandwichkekse (10) zur Bildung von Reihen über die Arbeitsbreite des Transportbands (5) nebeneinander und zur Bildung von Spalten entlang der Länge des Transportbands (5) hintereinander auf dem Transportband (5) aufliegen, wobei in den Reihen jeweils nur Deckel (9) oder Böden (8) und in den Spalten Deckel (9) und Böden (8) abwechselnd angeordnet sind.

11. Verfahren zum Herstellen von Sandwichkeksen (10), insbesondere mit einer Sandwichkeksvorrichtung (1) nach mindestens einem der vorhergehenden Ansprüche, mit den Schritten:
Ablegen von Deckeln (9) und Böden (8) für die Sandwichkekse (10) zur Bildung von Reihen über die Arbeitsbreite eines umlaufend angetriebenen Transportbands (5) nebeneinander und zur Bildung von Spalten entlang der Länge des Transportbands (5) hintereinander auf dem Transportband (5) derart, dass in den Reihen jeweils nur Deckel (9) oder Böden (8) und in den Spalten Deckel (9) und Böden (8) abwechselnd angeordnet sind,
Detektieren, ob ein Deckel (9) in einer Reihe fehlt,
wenn ein Deckel (9) fehlt: Verfahren eines dem fehlenden Deckel (9) zugeordneten Aufnahmeelements (4) eines Aufnahmebalkens (2) relativ zu einem Grundkörper (3) des Aufnahmebalkens (2) in eine deaktivierte Stellung,
Aufnehmen der Reihe von Deckeln (9) mit dem Aufnahmebalken (2), wobei jedes der Aufnahmeelemente (4) mit Ausnahme des sich in der deaktivierten Stellung befindlichen Aufnahmeelements (4) einen Deckel (9) aufnimmt,
Verfahren des Aufnahmebalkens (2) relativ zu dem Transportband (5), und
Ablegen der Reihe von Deckeln (9) auf einer Reihe von Böden (8), wobei sich alle Aufnahmeelemente (4) mit Ausnahme des dem fehlenden Deckel (9) zugeordneten Aufnahmeelements (4) in einer aktivierten Stellung befinden.

## Claims

1. A sandwich cookie apparatus (1), comprising an accommodation beam (2) having a base body (3) and a plurality of accommodation elements (4) being located at the base body (3) to each accommodate a cover (9) for a sandwich cookie (10), **characterised in that**
the accommodation elements (4) are designed to be movable with respect to the base body (3) between an activated position and a deactivated position and are arranged at the base body (3) such that they can attain the activated position and the deactivated position independently from the other accommodation elements (4), and
a missing cookie detection apparatus is present, the apparatus being designed such that it issues an error signal when a cover (9) for a sandwich cookie (10) is missing, and the accommodation element (4) being associated with the void (11) is moved from the activated position into the deactivated position due to the error signal.

2. The sandwich cookie apparatus (1) of claim 1, **characterised in that** the accommodation elements (4) are arranged at the base body (3) to be movable translationally.

3. The sandwich cookie apparatus (1) of claim 2, **characterised in that** the accommodation elements (4) are arranged to be movable with respect to the base body (3) between the activated position and the deactivated position over a path of at least 5 mm, especially at least 10 mm, especially between 5 mm and 50 mm.

4. The sandwich cookie apparatus (1) of at least one of the preceding claims, **characterised by** an accommodation element drive (12) being designed to automatically move the accommodation elements (4) between the activated position and the deactivated position.

5. The sandwich cookie apparatus (1) of claim 4, **characterised in that** the accommodation element drive (12) includes a hydraulically, pneumatically or electrically driven piston and cylinder unit (13).

6. The sandwich cookie apparatus (1) of at least one of the preceding claims, **characterised in that** the accommodation beam (2) is designed as a negative pressure beam and the accommodation elements (4) are designed as nozzle elements.

7. The sandwich cookie apparatus (1) of at least one of claims 1 to 5, **characterised in that** the accommodation beam (2) is designed as a grasp beam and the accommodation elements (4) are designed as grasp elements.

8. The sandwich cookie apparatus (1) of at least one of the preceding claims, **characterised in that** the missing cookie detection apparatus is designed such that it detects the lack of a cover (9) at an accommodation element (4).

9. The sandwich cookie apparatus (1) of at least one of the preceding claims, **characterised in that** the sandwich cookies (10) each include a bottom (8) and a revolvingly driven conveyor belt (5) for accommodating the covers (9) and the bottoms (8) for the sandwich cookies (10) is present, the accommodation beam (2) being designed and arranged to be movable with respect to the conveyor belt (5).

10. The sandwich cookie apparatus (1) of claim 9, **characterised in that** the covers (9) and the bottoms (8) for the sandwich cookies (10) are supported on the conveyor belt (5) side by side to form rows over the working width of the conveyor belt (5) and one after the other form columns along the length of the conveyor belt (5), only covers (9) or bottoms (8) being arranged in the rows, and covers (9) and bottoms (8) being alternatingly arranged in the columns.

11. A method of producing sandwich cookies (10), especially with a sandwich cookie apparatus (1) of at least one of the preceding claims, comprising the steps of:
placing covers (9) and bottoms (8) for the sandwich cookies (10) side by side to form rows over the working with of a rotatingly driven conveyor belt (5) and one after the other to form columns along the length of the conveyor belt (5) on the conveyor belt (5) such that only covers (9) or bottoms (8) are arranged in the rows and such that covers (9) and bottoms (8) are alternatingly arranged in the columns,
detecting if a cover (9) in a row is missing,
if a cover (9) is missing: moving an accommodation element (4) of an accommodation beam (2) being associated with the missing cover (9) with respect to the base body (3) of the accommodation beam (2) into a deactivated position,
accommodating the row of covers (9) with the accommodation beam (2), each of the accommodation elements (4) - with the exception of the accommodation element (4) being in the deactivated position - accommodating a cover (9),
moving the accommodation beam (2) with respect to the conveyor belt (5), and
placing the row of covers (9) on a row of bottoms (8), all accommodation elements (4) - with the exception of the accommodation element (4) being associated with the missing cover (9) - being in an activated position.

## Revendications

1. Dispositif pour biscuits sandwiches (1), avec une barre de prise en charge (2) avec un corps de base (3) et une pluralité d'éléments de prise en charges (4) disposés sur le corps de base (3) pour la prise en charge respectivement d'un couvercle (9) pour un biscuit sandwich (10), **caractérisé en ce que**
les éléments de prise en charge (4) sont conçus de manière mobile par rapport au corps de base (3), entre une position activée et une position désactivée et disposés sur le corps de base (3) de façon à ce qu'ils puissent prendre la position activée et la position désactivée indépendamment des autres éléments de prise en charge (4) et
un dispositif de détection de biscuits défectueux est présent, qui est conçu de façon à émettre un signal d'erreur lors de l'absence d'un couvercle (9) pour un biscuit sandwich (10) et, sur la base du signal d'erreur, l'élément de prise en charge (4) correspondant à l'endroit du défaut (11) est déplacé de la position activée vers la position désactivée.

2. Dispositif pour biscuits sandwiches (1) selon la revendication 1, **caractérisé en ce que** les éléments de prise en charge (4) sont disposés de manière mobile en translation sur le corps de base (3).

3. Dispositif pour biscuits sandwiches (1) selon la revendication 2, **caractérisé en ce que** les éléments de prise en charge (4) sont disposés de manière mobile par rapport au corps de base (3) entre la position activée et la position désactivée sur un trajet d'au moins 5 mm, plus particulièrement d'au moins 10 mm, plus particulièrement entre 5 mm et 50 mm.

4. Dispositif pour biscuits sandwiches (1) selon au moins l'une des revendications précédentes, **caractérisé par** un entraînement d'éléments de prise en charge (12) qui est conçu pour le déplacement mécanique des éléments de prise en charge (4) entre la position activée et la position désactivée.

5. Dispositif pour biscuits sandwiches (1) selon la revendication 4, **caractérisé en ce que** l'entraînement d'éléments de prise en charge (12) comprend une unité piston-cylindre hydraulique, pneumatique ou électrique (13).

6. Dispositif pour biscuits sandwiches (1) selon au moins l'une des revendications précédentes, **caractérisé en ce que** la barre de prise en charge (2) est conçue comme une barre à dépression et les éléments de prise en charges (4) sont conçus comme des éléments à buses.

7. Dispositif pour biscuits sandwiches (1) selon au moins l'une des revendications 1 à 5, **caractérisé en ce que** la barre de prise en charge (2) est conçue comme une barre de préhension et les éléments de prise en charge (4) sont conçus comme des éléments de préhension.

8. Dispositif pour biscuits sandwiches (1) selon au moins l'une des revendications précédentes, **caractérisé en ce que** le dispositif de détection de biscuits défectueux est conçu de façon à détecter l'absence d'un couvercle (9) au niveau d'un élément de prise en charge (4).

9. Dispositif pour biscuits sandwiches (1) selon au moins l'une des revendications précédentes, **caractérisé en ce que** les biscuits sandwiches (10) comprennent chacun un fond (8) et une bande de transport (5) entraînée de manière circulaire est présente pour le prise en charge des couvercles (9) et des fonds (8) pour les biscuits sandwiches (10), dans lequel la barre de prise en charge (2) est conçue et disposée de manière mobile par rapport à la bande de transport (5).

10. Dispositif pour biscuits sandwiches (1) selon la revendication 9, **caractérisé en ce que** les couvercles (9) et les fonds (8) pour les biscuits sandwiches (10) sont disposés sur la bande de transport (5) de manière juxtaposée pour la formation de lignes sur la largeur de travail de la bande de transport (5) et sont disposés les uns derrière les autres pour la formation de colonnes sur la longueur de la bande de transport (5), dans lequel, dans les lignes, seuls des couvercles (9) ou des fonds (8) et, dans les colonnes, des couvercles (9) et des fonds (8) sont disposés en alternance.

11. Procédé de fabrication de biscuits sandwiches (10), plus particulièrement avec un dispositif pour biscuits sandwiches (1) selon au moins l'une des revendications précédentes, avec les étapes suivantes :
disposition sur la bande de transport (5) de manière juxtaposée des couvercles (9) et des fonds (8) pour les biscuits sandwiches (10) afin de former des lignes sur la largeur de travail d'une bande de transport (5), entraînée de manière circulaire et disposition les uns derrière les autres pour la formation de colonnes sur la longueur de la bande de transport (5) de façon à ce que, dans les lignes, seuls des couvercles (9) ou des fonds (8) et, dans les colonnes, des couvercles (9) et des fonds (8) soient disposés en alternance,
détection si un couvercle (9) est manquant dans une ligne,
si un couvercle (9) est manquant : déplacement d'un élément de prise en charge (4), correspondant au couvercle (9) manquant, d'une barre de prise en charge (2), par rapport à un corps de base (3) de la barre de prise en charge (2) vers une position désactivée,
prise en charge de la ligne de couvercle (9) avec la barre de prise en charge (2), dans lequel chacun des éléments de prise en charge (4) prend en charge un couvercle (9) à l'exception de l'élément de prise en charge (4) se trouvant dans la position désactivée,
déplacement de la barre de prise en charge (2) par rapport à la bande de transport (5) et
dépôt de la ligne de couvercles (9) sur une ligne de fonds (8), dans lequel tous les éléments de prise en charge (4) se trouvent dans une position activée à l'exception de l'élément de prise en charge (4) correspondant au couvercle (9) manquant.
